(19) Europäisches Patentamt
European Patent Office
Office européen des brevets

(11) EP 3 036 539 B1

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **15707866.8**

(22) Anmeldetag: **12.02.2015**

(51) Int Cl.:
***G01N 21/85*** (2006.01) ***G01N 21/25*** (2006.01)
***G01N 21/79*** (2006.01) ***G01N 31/16*** (2006.01)

(86) Internationale Anmeldenummer:
**PCT/EP2015/000312**

(87) Internationale Veröffentlichungsnummer:
**WO 2015/165559 (05.11.2015 Gazette 2015/44)**

(54) **VERFAHREN ZUR ERWEITERUNG DES MESSBEREICHES VON FOTOMETRISCHEN SYSTEMEN**

METHOD FOR EXTENDING THE MEASUREMENT RANGE OF PHOTOMETRIC SYSTEMS

PROCEDE POUR ETENDRE LA GAMME DE MESURE DANS LES SYSTEMES PHOTOMETRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2014 DE 102014006317**

(43) Veröffentlichungstag der Anmeldung:
**29.06.2016 Patentblatt 2016/26**

(73) Patentinhaber: **Gebrüder Heyl Analysentechnik GmbH & Co. KG**
**31135 Hildesheim (DE)**

(72) Erfinder: **NEDDERMEIER, Rüdiger**
**31167 Bockenem (DE)**

(74) Vertreter: **Müller-Boré & Partner Patentanwälte PartG mbB**
**Friedenheimer Brücke 21**
**80639 München (DE)**

(56) Entgegenhaltungen:
**EP-A1- 1 506 813**
**WO-A1-95/03537**
**WO-A1-2009/017461**
**US-A- 3 932 131**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 036 539 B1

## Beschreibung

Die vorliegende Erfindung betrifft ein Verfahren zur Erweiterung des Messbereiches von fotometrischen Systemen. Insbesondere betrifft die Erfindung ein fotometrisches Verfahren zur Bestimmung relativ hoher Konzentrationen. Ferner betrifft die vorliegende Erfindung ein Verfahren zur Bestimmung des Chlorgehaltes in Fluiden.

Fotometrische Messungen werden u.a. zur Konzentrationsbestimmung eingesetzt. Durchstrahlt man die Lösung einer absorbierenden Substanz mit Licht, so hängt die Intensität des austretenden Anteils gemäß dem Lambert-Beer'schen Gesetz von den Stoffeigenschaften der Substanz, der Konzentration sowie der durchstrahlten Wegstrecke ab.

$$E = \varepsilon * c * d$$

E = Extinktion (Logarithmus des Quotienten der Intensität des eingestrahlten und austretenden Lichtanteils)
ε = Extinktionskoeffizient (substanzspezifisch)
c = Konzentration der Substanz
d = Wegstrecke der durchstrahlten Lösung

Konzentrationsbestimmungen werden üblicherweise derart durchgeführt, dass man das Verhältnis bekannter Substanzkonzentrationen c zu deren Extinktion E mathematisch erfasst und somit unbekannte Konzentrationen anhand von Extinktionsmessungen errechnen kann. Das heißt in der Praxis häufig: Für die fotometrische Messung wird ein festgelegtes Volumen des mit dem zu bestimmenden Stoff eine Färbung verursachenden Reagenz' mit einem festgelegten Volumen einer Lösung des Stoffes unbekannter Konzentration vereinigt, gemischt und fotometrisch die Extinktion E(Absorption) der entstandenen Färbung in einem Gefäß mit festgelegten Abmessungen (Messzelle mit Wegstrecke d) gemessen, wobei anhand des Extinktionswertes durch Vergleich mit Kalibrierungswerten bekannter Konzentrationen die unbekannte Konzentration der Probe ermittelt wird.

Der substanzspezifische Extinktionskoeffizient ε ist für gängige fotometrische Messverfahren häufig dergestalt, dass nur Proben mit relativ geringer Konzentration c gemessen werden können. Das heißt, die realisierbaren Messbereiche dieser Methode sind seitens der Anwendbarkeit des Lambert-Beer'schen Gesetzes, der substanzspezifischen Eigenschaften sowie der apparativen Möglichkeiten der verwendeten Messsysteme eingeschränkt. Eine Erweiterung des Messbereiches wird üblicherweise durch eine der eigentlichen Messung vorausgehenden Verdünnung der Substanz oder eine Verringerung der Wegstecke d realisiert.

EP 1 825 915 A2 betrifft einen Handgerät zum Dosieren und ggf. Titrieren. Ein durch Schrittmotoren bewegter Kolben treibt Probeflüssigkeit in ein Gefäß, in welchem sich der andere Teil der Titrationspartner befindet. Ein Farbumschlag wird mit einem Sensor erfasst und steuert den Schrittmotor des Handgeräts, um den Umschlagspunkt mit höherer Genauigkeit zu finden. Die Druckschrift berichtet nichts über die Verwendung von Proben mit hohen Konzentrationen.

WO 2009/017461 A1 offenbart ein automatisches Titrationssystem mit kolorimetrischer Endpunktserkennung.

Eine Aufgabe der vorliegenden Erfindung besteht somit darin, ein fotometrisches Verfahren zur Bestimmung von Stoffen bereitzustellen, die in hoher Konzentration vorliegen, wobei keine vorangehende Verdünnung der Probe erforderlich ist.

Überraschenderweise wurde gefunden, dass die schrittweise Zufuhr einer Proben-Lösung mit einer relativ hohen Substanzkonzentration (z.B. um 2 g/l im Falle der Bestimmung von Chlor in wässriger Lösung) über eine Mikrodosiervorrichtung, vorzugsweise eine Mikrodosierpumpe, zu einer in einer Messzelle befindlichen Lösung eines Reagenz' im Falle der Chlorbestimmung mit einer N,N-Diethyl-p-phenylendiaminsulfat-Lösung (DPD) bis fotometrisch mit dem Extinktionskoeffizienten ε (9800 $l*Mol^{-1} * cm^{-1}$) eine bestimmte Extinktion erreicht ist und Erfassen der verbrauchten Proben-Lösung, die Bestimmung einer wesentlich höheren Konzentration als die im Normalfall maximal erlaubte (im Falle der üblichen Chlorbestimmung 5 mg/l) ermöglicht.

Gelöst wird die vorstehend genannte Aufgabe durch ein Verfahren zur Erweiterung des Messbereichs bei der fotometrischen Bestimmung der Konzentration eines gelösten Stoffes bzw. Probe 2, wobei die Lösung des gelösten Stoffes 2 mittels einer Mikrodosiervorrichtung 3, 4, 5 solange zu einer festgelegten Menge an vorgelegtem Reagenz 1 in eine Messzelle 11 dosiert wird, bis die durch die Reaktion des gelösten Stoffes mit dem Reagenz entstehende Färbung fotometrisch erfasst einen Extinktionswert X, entsprechend einer bekannten Konzentration von Stoff 2, erreicht, woraufhin die Menge an verbrauchtem gelöstem Stoff 2 an der Mikrodosiervorrichtung 3, 4, 5 erfasst wird und die Konzentration wie folgt berechnet wird:

$$c_x = c_{bekannt} * (V_1 + V_2) / V_2$$

wobei

| | |
|---|---|
| $c_x$ | die zu bestimmende Konzentration des gelösten Stoffes 2 ist, |
| $c_{bekannt}$ | eine bekannte Konzentration des gelösten Stoffes 2 ist, |
| $V_1$ | das Volumen der Messzelle mit der Lösung von Reagenz 1 ist, und |
| $V_2$ | das mit der Mikrodosiervorrichtung 3, 4, 5 verbrauchte Volumen der Lösung des gelösten Stoffes bzw. Probe 2 ist und |

wobei $V_2 < V_1$ ist.

Vorzugsweise liegt das Volumenverhältnis von $V_2$ zu $V_1$ im Bereich von 1:200000 bis 1:10. Bevorzugter liegt das Volumenverhältnis von $V_2$ zu $V_1$ im Bereich von 1:200000 bis 1:100, vorzugsweise im Bereich von 1:200000 bis 1:1000, insbesondere im Bereich von 1:200000 bis 1:5000 oder im Bereich von 1:200000 bis 1:10000.

Vorzugsweise liegt das Konzentrationsverhältnis von $c_{bekannt}$ zu $c_x$ im Bereich von 1:200000 bis 1:10. Bevorzugter liegt das Konzentrationsverhältnis von $c_{bekannt}$ zu $c_x$ im Bereich von 1:200000 bis 1:100, vorzugsweise im Bereich von 1:200000 bis 1:1000, insbesondere im Bereich von 1:200000 bis 1:5000 oder im Bereich von 1:200000 bis 1:10000. Vorzugsweise wird die bekannte Konzentration des gelösten Stoffes so ausgewählt, dass sich eine Extinktion von 0,5 ergibt. Es kann allerdings auch jeder andere Extinktionswert gewählt werden, solange die Genauigkeit bei der Messung noch ausreichend ist und er einer bestimmten bekannten Konzentration $c_{bekannt}$ zugeordnet ist.

Weitere bevorzugte Ausführungsformen sind in den Unteransprüchen definiert.

Figur 1 zeigt ein Beispiel einer erfindungsgemäßen Messvorrichtung.

Das Verfahren ist ähnlich dem Prinzip einer inversen Titration und ist auf beliebige andere übliche fotometrische Verfahren anwendbar, sofern die reaktionskinetischen Bedingungen dies zulassen. Das Prinzip der inversen Titration, an das die vorliegende Erfindung angelehnt ist, findet man beispielsweise bei der Bestimmung von Nitrit nach Lunge. Die Titration erfolgt dabei so, dass die Proben-Lösung (Nitritlösung) in die Bürette gefüllt wird und langsam zu einer $KMnO_4$-Maß-Lösung als Vorlage unter Erwärmen letzterer getropft wird, bis die Färbung verschwunden ist. Die Beweggründe für die in Bezug auf eine übliche Titration vertauschten Lösungen sind im Gegensatz zur Aufgabe der vorliegenden Erfindung dabei ausschließlich reaktionskinetischer Art.

Die Erfindung wird nachstehend anhand einer Chlorbestimmung genauer erläutert. Chlor-Lösungen können hinsichtlich ihrer Chlor-Konzentration fotometrisch bestimmt werden. Insbesondere werden in der Industrie und in der Wasserhygiene wässrige Chlor-Lösungen vielfach eingesetzt. Chlor löst sich zu etwa 7g in 1l Wasser. Für keimhemmende Lösungen in Schwimmbädern werden im Allgemeinen Chlorkonzentrationen von 0,3 bis 0,6 mg/l Wasser eingesetzt. Verschiedene Messverfahren sind üblich. Unter anderen hat die so genannte fotometrische Bestimmung mit N,N-Diethyl-p-phenylendiamin-Reagenz (DPD) große Bedeutung erlangt. Verfahren, die DPD als Reagenz zur Chlorbestimmung in Wasser verwenden, sind z.B. in GB 2,312,953 A oder CN 103616373A beschrieben. DPD reagiert mit Chlor-enthaltendem Wasser unter Ausbildung einer roten Färbung, sodass die für übliche Anwendungen erforderlichen relativ niedrigen Chlor-Konzentrationen gut erfasst werden können. DIN 38 408, Teil 4-2 (ersetzt durch EN ISO 7393-2 : 2000) schreibt das Verfahren zur Wasseranalyse vor. Als Messgröße dient die Absorption im Maximum des UV/VIS-Spektrums des roten Farbstoffs, der durch die Reaktion von DPD mit $Cl_2$ gebildet wird. Bei der Umsetzung von Chlor aus der Chlor enthaltenden wässrigen Probe mit DPD wird zunächst, wenn geringere Mengen Chlor mit DPD reagieren, ein farbiges Radikal, nämlich Wurster's Rot, gebildet. Wenn die Chlor-Konzentration zunimmt, erfolgt die Umsetzung zum Imin, welches farblos ist:

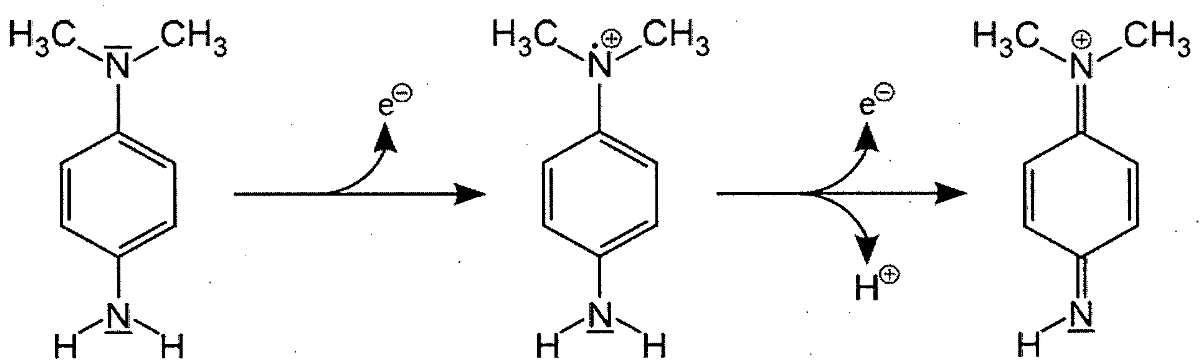

farblos rot farblos

DPD wird im Allgemeinen als N,N-Diethyl-p-phenylendiaminsulfatsalz eingesetzt. Prinzipiell sind aber auch andere wasserlösliche Salze von DPD geeignet, solange sie keine Oxidation fördern, da die DPD-Base oxidationsempfindlich ist und bereits an der Luft beginnt, sich unter Bildung farbiger Oxidationsprodukte mit dem Sauerstoff umzusetzen.

Die Absorption des roten Wurster-Farbstoffs ist proportional zur vorhandenen FarbstoffKonzentration bzw. zur vorliegenden Menge an freiem Chlor.

Das Verfahren eignet sich gut für Chlor-Konzentrationen im Bereich bis 5 mg/l, d.h. für die üblichen Chlor-Konzentrationen in behandeltem Wasser. Auch andere Halogen-Lösungen sowie Lösungen von Hypohalogeniten lassen sich erfassen. Prinzipiell lassen sich Konzentrationen von Lösungen bestimmen, bei denen der zu bestimmende Stoff ein zur Bildung des Wurster-Farbstoffs ausreichendes Oxidationspotential besitzt. Das trifft neben den vorstehend genannten Halogenen und Halogenverbindungen, z.B. auf Ozon oder Peroxide zu. Schwieriger wird die Bestimmung höherer Konzentrationen, z.B. Chlorkonzentrationen bis beispielsweise 2 g/l. Bei der Verwendung des vorstehend erläuterten Verfahrens ist ein vorangehender Verdünnungsschritt von etwa 1:1000 erforderlich. Für Routine-Messungen erweist sich dies als umständlich und zeitraubend. Daher wird das erfindungsgemäße Verfahren eingesetzt, das nachfolgend beispielhaft anhand der Chlorbestimmung mit DPD erläutert wird.

Im Falle der Bestimmung von Chlor in Wasser bei einer Konzentration von ca. 2 g/l wird somit wie folgt vorgegangen. Für ein Messsystem wird ein optimaler fotometrischer Arbeitspunkt aus dem für dieses System bekannten Verhältnis von Substanzkonzentrationen $c_{bekannt}$ zu deren Extinktion E ausgewählt.

Zu einem bekannten Volumen $V_1$ der Reagenzlösung für die zu bestimmende Substanz wird solange mittels einer hochauflösenden Mikrodosierpumpe ein Volumen $V_2$ der (hochkonzentrierten) Lösung mit der Konzentration $c_x$ der zu bestimmenden Substanz gegeben, bis der vorgegebene fotometrische Arbeitspunkt erreicht ist (somit also die Extinktion für eine Konzentration $c_{bekannt}$ erreicht ist).

Die Konzentration $c_x$ der hochkonzentrierten Lösung lässt sich einfach anhand der Gleichung

$$c_x = c_{bekannt} * (V_1 + V_2) / V_2$$

errechnen.

Der Messbereich ist somit nur noch vom Verhältnis des vorgegebenen Volumens $V_1$ und von der Auflösung der Mikrodosiervorrichtung abhängig.

Die Extinktion X (Absorption) der Färbung kann vorzugsweise bei 500 bis 560 nm fotometrisch gemessen werden. Bevorzugt ist eine Wellenlänge von 510 nm (Optimum der Extinktionskurve).

Eine im erfindungsgemäßen Verfahren eingesetzte beispielhafte Vorrichtung ist ausgestattet mit

- einem Gefäß für die Probe 2,
- einer Messzelle 11,
- einer Mikrodosiervorrichtung 3, 4, 5,
- einer Lichtquelle 7, vorzugsweise für monochromatisches Licht
- einem Lichtempfänger 8
- einer Mess- und Regelungseinheit 9
  und
- gegebenenfalls einer Mischvorrichtung 6,

wobei der Lichtempfänger 8 und die Mikrodosiervorrichtung 3, 4, 5 mit der Mess- und Regeleinheit 9 funktional so verbunden sind, dass nach Erreichen eines Extinktionswertes X der Verbrauch der Mikrodosiervorrichtung 3, 4, 5 erfasst wird.

Die Probenlösung kann sich in einem Raum der Mikrodosiervorrichtung befinden, wobei in dem Fall Zuleitung 4 entfällt. Dies trifft zum Beispiel für Mikrodosiervorrichtungen vom Spritzentyp mit einem durch einen Schrittmotor druckbeaufschlagten Kolben zu.

Bezugsziffern-Liste:

1 Reagenzlösung
2 Probenlösung
3 Mikrodosiervorrichtung
4 Zuleitung zur Vorrichtung

5 Zuleitung zur Messzelle 11
6 Mischvorrichtung - hier Magnetrührvorrichtung
7 Lichtgeber
8 Lichtempfänger
9 Mess- und Regel-Einheit und Messwert-Verarbeitung
10 Signalleitung von 3 zu 9 (zur Erfassung der dosierten Menge an Probelösung)
11 Messzelle

**Beispiel**

(Chlorbestimmung)

Nach dem Stand der Technik sind fotometrische Chlorbestimmungen mittels des sogenannten DPD-Verfahrens bis maximal 5 mg/l möglich.

Die Absorption einer Lösung, welche 2 mg/l Chlor enthält, beträgt ca. 0,5 (optimaler Arbeitspunkt).

Zum Einsatz kommt eine Messzelle 11 mit einem Volumen $V_1$ = 20 ml sowie eine Mikrodosierpumpe 3, 5 mit einem Volumenvorrat von 2 ml und einer Auflösung von 0,2 µl (10000 Schritte pro Volumenvorrat). 100 Schritte werden von einer hochkonzentrierten Chlorlösung 2 dosiert.

$$c_{bekannt} = 2\ mg/l$$

$$V_1 = 20\ ml$$

$$V_2 = 100 * 0{,}2\ \mu l = 20\ \mu l = 0{,}02\ ml$$

$$c_x = c_{bekannt} * (V_1 + V_2) / V_2$$

$$c_x = 2\ mg/l * (20\ ml + 0{,}02\ ml) / 0{,}02\ ml$$

$$c_x = 2002\ mg/l$$

Im vorliegenden Beispiel ist somit eine Messbereichserweiterung von 5 mg/l auf 2000 mg/l realisierbar.

**Patentansprüche**

**1.** Verfahren zur Erweiterung des Messbereichs bei der fotometrischen Bestimmung der Konzentration eines gelösten Stoffes (2), wobei die Lösung des gelösten Stoffes (2) mittels einer Mikrodosiervorrichtung (3, 4, 5) solange zu einer festgelegten Menge an vorgelegtem Reagenz (1) in eine Messzelle (11) dosiert wird, bis die durch die Reaktion des gelösten Stoffes mit dem Reagenz entstehende Färbung fotometrisch erfasst einen Extinktionswert X, entsprechend einer bekannten Konzentration an Stoff (2), erreicht, woraufhin die Menge an verbrauchtem gelöstem Stoff (2) an der Mikrodosiervorrichtung (3, 4, 5) erfasst wird und die Konzentration wie folgt berechnet wird:

$$c_x = c_{bekannt} * (V_1 + V_2) / V_2$$

wobei

$c_x$ die zu bestimmende Konzentration des gelösten Stoffes (2) ist,
$c_{bekannt}$ eine bekannte Konzentration des gelösten Stoffes (2) ist,

$V_1$ das Volumen der Messzelle mit der Lösung von Reagenz (1) ist, und
$V_2$ das mit der Mikrodosiervorrichtung (3, 4, 5) verbrauchte Volumen der Lösung des gelösten Stoffes (2) ist, und

wobei $V_2 < V_1$ ist.

2. Verfahren nach Anspruch 1, wobei das Verhältnis von $V_2$ zu $V_1$ im Bereich von 1:200000 bis 1:10 liegt.

3. Verfahren nach Anspruch 1 oder 2, wobei der zu bestimmende gelöste Stoff eine Lösung eines Halogens oder Hypohalogenits ist und das Reagenz eine Lösung von N,N-Diethyl-p-phenylendiamin (DPD) umfasst.

4. Verfahren nach Anspruch 3, wobei der gelöste Stoff Chlor in wässriger Lösung ist.

## Claims

1. A method of extending the measurement range during the photometric determination of the concentration of a dissolved substance (2), where the solution of the dissolved substance (2) is metered by means of a micrometering device (3, 4, 5) to a specified amount of precharged reagent (1) into a measuring cell (11) until the coloration which forms as a result of the reaction of the dissolved substance with the reagent, ascertained photometrically, achieves an extinction value X, corresponding to a known concentration of substance (2), whereupon the amount of consumed dissolved substance (2) is ascertained at the micrometering device (3, 4, 5) and the concentration is calculated as follows:

$$c_x = c_{known} * (V_1 + V_2) / V_2$$

where

$c_x$ is the concentration of the dissolved substance (2) to be determined,
$c_{known}$ is a known concentration of the dissolved substance (2),
$V_1$ is the volume of the measuring cell with the solution of reagent (1), and
$V_2$ is the volume of the solution of the dissolved substance (2) consumed with the micrometering device (3, 4, 5), and

where $V_2 < V_1$.

2. The method as claimed in claim 1, where the ratio of $V_2$ to $V_1$ is in the range from 1:200000 to 1:10.

3. The method as claimed in claim 1 or 2, where the dissolved substance to be determined is a solution of a halogen or a hypohalogenite and the reagent comprises a solution of N,N-diethyl-p-phenylenediamine (DPD).

4. The method as claimed in claim 3, where the dissolved substance is chlorine in aqueous solution.

## Revendications

1. Procédé pour l’élargissement de la gamme de mesure lors de la détermination photométrique de la concentration d’une substance dissoute (2), dans lequel la solution de la substance dissoute (2) est dosée au moyen d’un dispositif de microdosage (3,4,5) dans une quantité déterminée d’un réactif préchargé (1), dans une cellule de mesure (11), jusqu’à ce que la coloration qui se forme suite à la réaction de la substance dissoute avec le réactif, vérifiée photométriquement, atteint une valeur d’extinction X, correspondant à une concentration connue de la substance (2), après quoi la quantité de la substance dissoute consommée (2) est déterminée par le dispositif de microdosage (3,4,5) et la concentration est calculée comme suit :

$$c_x=c_{connu}*(V_1+V_2)/V_2$$

formule dans laquelle

$c_x$ est la concentration de la substance dissoute (2) à déterminer,
$c_{connu}$ est une concentration connue de la substance dissoute (2),
$V_1$ est le volume de la cellule de mesure avec la solution du réactif (1), et
$V_2$ est le volume de la solution de la substance dissoute (2) consommée avec le dispositif de microdosage (3,4,5), et

dans laquelle $V_2 < V_1$.

**2.** Procédé selon la revendication 1, dans lequel le rapport de $V_2$ sur $V_1$ est dans la gamme de 1:200000 à 1:10.

**3.** Procédé selon la revendication 1 ou 2, dans lequel la substance dissoute à déterminer est une solution d'un halogène ou d'un hypohalogénite et le réactif comprend une solution de N,N-diéthyl-p-phénylènediamine (DPD).

**4.** Procédé selon la revendication 3, dans lequel la substance dissoute est du chlore en solution aqueuse.

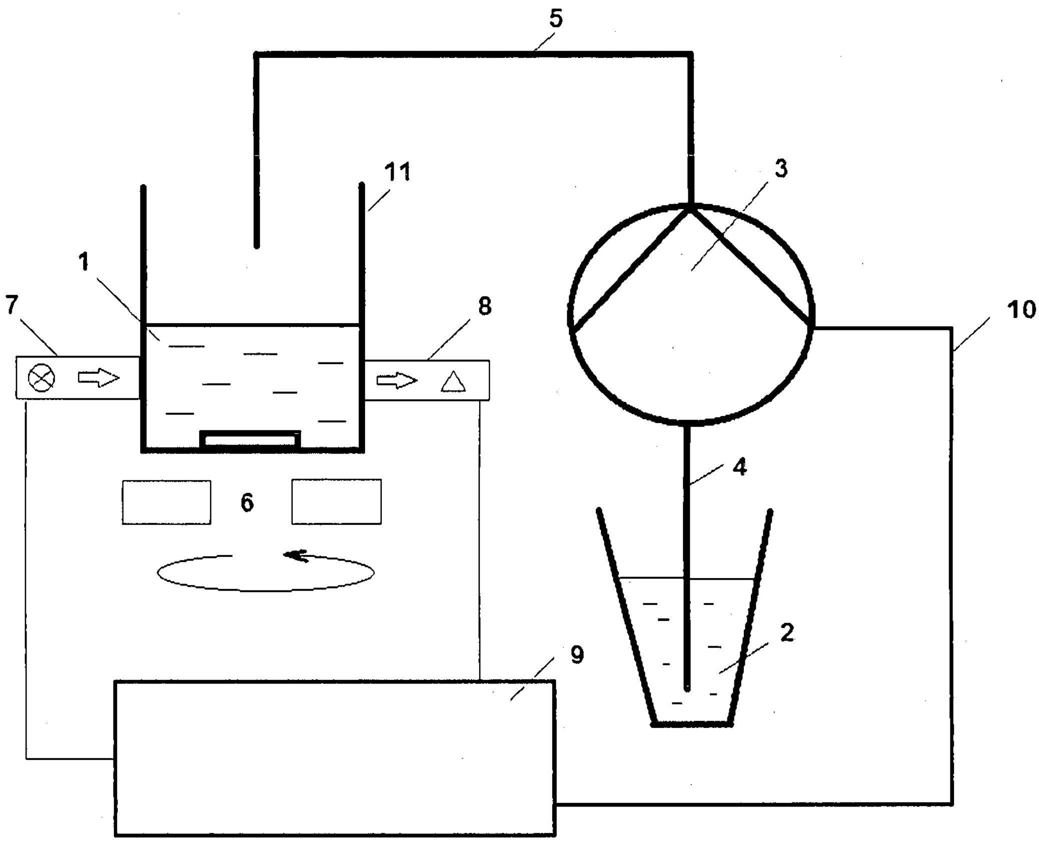


Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1825915 A2
- WO 2009017461 A1
- GB 2312953 A
- CN 103616373 A